# EUROPEAN PATENT SPECIFICATION

(11) **EP 2 982 842 B1**
(45) Date of publication and mention of the grant of the patent: **14.03.2018**
(21) Application number: 15179733.9
(22) Date of filing: 04.08.2015
(51) Int. Cl.: F01N 3/08, F01N 13/10, F01N 3/20, F01N 9/00, F01N 3/021, F01N 13/00, F01N 3/10

(54) **SYSTEM FOR REDUCING HARMFUL EMISSIONS OF AN INTERNAL COMBUSTION ENGINE**
SYSTEM ZUR VERRINGERUNG DES SCHADSTOFFAUSSTOSSES EINER BRENNKRAFTMASCHINE
SYSTÈME DE RÉDUCTION DES ÉMISSIONS NOCIVES D'UN MOTEUR À COMBUSTION INTERNE

(30) Priority: 07.08.2014 IT TO20140641
(43) Date of publication of application: 10.02.2016
(73) Proprietor: S.T.C. S.r.l., 10191 Alpignano (TO) (IT)
(72) Inventor: COLONNA, Giuseppe, 10142 Torino (IT)
(74) Representative: Boggio, Luigi

(56) References cited:
- EP-A1- 0 313 922
- WO-A1-02/33231
- DE-A1- 19 807 203
- DE-A1-102008 058 838
- DE-A1-102009 030 275
- KR-B1- 101 230 417

## Description

### Field of application of invention

The present invention relates to the field of systems for reducing the harmful emissions of internal combustion engines and in particular relates to the field of AfterTreatment systems (ATS) where exhaust gas is recirculated over the ATS as shown in DE19807203 or EP0313922 disclosing the features of the preamble of appended claim 1.

### State of the art

Internal combustion engines are equipped with at least two systems for reducing pollutant emissions, namely exhaust gas aftertreatment systems, known as ATS and exhaust gas recirculation systems, which recirculate exhaust gas through the internal combustion engine, known as EGR.

The pollutants are NOx, unburnt hydrocarbons HC and, for diesel engines, also particulate matter PM.

An ATS for diesel engines may comprise at least one the following:
- diesel particulate filter (DPF),
- diesel oxidation catalyst (DOC),
- diesel oxidation catalyst (DOC) combined with a diesel particulate filter (DPF),
- selective catalytic reduction (SCR)
- ammonia oxidation catalyst aka clean-up catalyst (CUC)
- selective catalytic reduction (SCR) combined with a clean-up catalyst (CUC).

Generally, the components of such an ATS are arranged in succession:
DOC - DPF - SCR - CUC
DOC for reducing unburnt hydrocarbons, DPF (and similar) for trapping particulate matter, SCR for reducing NOx and CUC for removing any excess ammonia resulting from operation of the SCR, which as is known cooperates with the injection of a urea-based solution for NOx reduction.

With regard to petrol engines, an ATS of a petrol engine is usually equipped with a so-called three-way catalyst for the simultaneous reduction of CO, HC and NOx. It can also be equipped with a pre-cat, that is to say a kind of DOC (like those implemented in diesel engines) placed immediately downstream of the exhaust manifold. In addition, the ATS of a petrol engine can also comprise an NSC (Nitrogen Storage Catalyst) and/or LNT (Lean NOx Trap) and/or a DPF (Diesel Particulate Filter).

EGR can be implemented both in petrol and in diesel engines and contributes to reducing NO_{X} through oxygen depletion in the air mixture. This, as is known, causes a drop in efficiency of the internal combustion engine, increasing fuel consumption.

Thus, limiting harmful emissions comes at the expense of fuel consumption.

Another particularly decisive factor for achieving the above-mentioned objectives is the operation of the ATS within predetermined temperature ranges. One consequently speaks of ATS thermal management.

While an ATS of a diesel engine might not activate itself because the minimum activation temperature is not reached, which is generally 250°C, an ATS of a petrol engine runs the risk of exceeding the maximum design temperature, resulting in irreparable deterioration.

In diesel engines, the problem is usually overcome by choking the engine in order to increase the temperature of the exhaust gas inside the ATS by altering the operating point of the internal combustion engine.

In petrol engines, we have the opposite problem of having to limit the temperature of the ATS. This problem is overcome by increasing the petrol charge with respect to the stoichiometric ratio to reduce, with its evaporation, the overall temperature at the exhaust. It is obvious that this petrol cannot burn and so increases pollutants at the exhaust. In both cases, temperature control of the ATS is performed at the expense of fuel consumption.

### Summary of invention

The object of the present invention is to achieve a reduction in the consumption of and/or the pollutants emitted by internal combustion engines.

These and other objects are achieved through the present invention.

The basic idea of the present invention is to perform exhaust gas recirculation through the ATS. In other words, instead of recirculating exhaust gas between the exhaust and the intake of the internal combustion engine, it is recirculated through at least one component of the ATS, without returning to the internal combustion engine.

This recirculation is performed via a recirculation line comprising a fan or compressor or pump, which can be controlled in different ways.

According to the present invention, the recirculation is performed at the level of the component assigned to NOx reduction. For a diesel engine, this means that recirculation is preferably performed at SCR level, while for a petrol engine, which usually employs a three-way catalyst TWC, it is performed at the three-way catalyst level.

In addition, a main object of the present invention is to enable better catalysis of the pollutants that pass through the ATS, while they pass through it and not to accumulate them and then eliminate them later on.

Therefore, the presence of an NSC or LNT or an HC adsorber in a recirculation circuit according to the present invention is entirely optional and subordinate to recirculation performed on at least one catalyst scrubber device, namely a DOC, DPF, SCR, CUC, TWC, pre-cat, etc.

The term 'pollutants' means not only those produced by the internal combustion engine, but in the specific case of the CUC, also the excess ammonia following injection of a urea-based agent in the ATS, generally immediately upstream of the SCR.

According to another preferred embodiment of the invention, recirculation is performed also at the particulate filter DPF level. It can be applied both to a diesel and to a petrol engine. In the first case, it can integrate a DOC. In the second, it can integrate the TWC.

According to further preferred embodiments of the invention the recirculation may regard not just one component of the ATS assigned to reducing pollutants, but also two or more of these components, possibly with separate and/or connected recirculation circuits.

According to the present invention, the recirculation regards an SCR and an excess ammonia removal device CUC, by withdrawing exhaust gas upstream or downstream of the CUC in relation to a working operating condition of said ATS and/or of said internal combustion engine.

The concept of recirculation described here cannot and must not be confused with the passage of exhaust gas through two similar or identical devices arranged in series one after the other.

The concept of recirculation described here assumes the passage of a portion of exhaust gas at least two times through one or more pollution abatement devices.

The concept of recirculation described here is also applicable to those applications where a first group of cylinders is connected to a first pollution abatement device and a second group of cylinders is connected to a second pollution abatement device and wherein a portion of exhaust gas taken downstream of said first pollution abatement device is sent to the inlet of said second pollution abatement device and vice versa.

Also in this case, it is obvious that the two devices, although similar or identical, are not reciprocally arranged in series with each other.

According to a preferred embodiment of the invention, said recirculation is performed continuously and modulated as a function of the power supplied by the internal combustion engine in order to reduce pollutants as they are generated and not, for example, to regenerate the one or more abatement devices through which the recirculation is performed. In this context, as indicated above, an 'abatement device' means a device that primarily catalyses polluting agents produced by the internal combustion engine and can only store them as a secondary effect, as in a DPF for example. Therefore, an LNT or an NSC should not be considered as a pollution abatement device according to the present invention.

The claims describe preferred embodiments of the present invention, forming an integral part of the present description.

### Brief description of figures

Further objects and advantages of the present invention will become clear from the detailed description that follows of an embodiment thereof (and of its embodiments) and from the accompanying drawings provided purely by way of non-limitative example, in which:
Figure 1 schematically shows an embodiment, which is not part of the invention, adaptable to any type of internal combustion engine,
Figures 2 - 4 and 6 - 7 show embodiments of the scheme in Figure 1 applied to a diesel engine,
Figure 5 shows a further preferred embodiment applicable to both a diesel and a petrol engine, optionally combinable with the embodiments shown in Figures 2 - 4 and 6 - 7,
Figure 8 shows one of the various possible combinations of the solutions in Figure 6 and 7, and
Figure 9 shows a further embodiment applied to a petrol engine and optionally combinable with the solutions in Figure 5 6. Note that figure 4 shows an embodiment according to the invention whereas figure 1-3 and 5-9 show examples which are not part of the claimed invention.
Where a block is drawn with dashed lines, this means that it might not be present, especially for the purpose of making the schemes applicable to both the diesel cycle and the petrol (Otto) cycle; in addition, where more than one component is shown in a dashed box, they are to be considered in series with each other as taught by the known art.

The same reference numerals and letters in the figures identify the same elements or components.

### Detailed description of embodiments

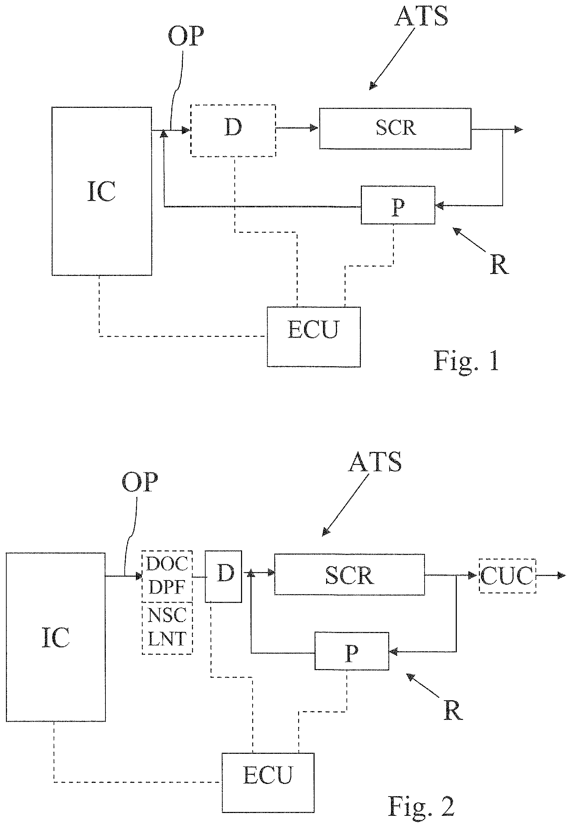

Referring to Figure 1, an internal combustion engine IC has an exhaust manifold connected to an ATS comprising at least one pollutant abatement device.

In the case of a diesel engine, this can be represented by an SCR comprising a dosing and mixing device D of a urea-based reduction agent and/or a DPF particulate filter possibly equipped with a DOC. In the case of a petrol engine, this can be represented by a three-way catalyst TWC and/or a particulate filter.

In addition, especially for petrol engines, this pollutant abatement device can be an NSC (Nitrogen Storage Catalyst) or LNT (Lean NOx Trap) and/or a CUC.

A device is defined as 'upstream' or 'downstream' in relation to the normal circulation of exhaust gas from the exhaust manifold OP of the internal combustion engine IC to the environment.

It is worth distinguishing between abatement devices of a polluting substance such as a DOC or an SCR or a CUC and a storage device of a polluting substance such as an NSC or an LTN or an HC adsorber.

Particulate filters clearly belong to the first device category as the primary function they perform is to eliminate particulate matter without accumulating it, while the so-called forced regenerations due to the accumulation of particulate matter should be considered exceptional events. In fact, latest-generation particulate filters have high natural regeneration efficiency, achieved through the interaction between PM and N02, to limit or cancel the need for forced regenerations.

An additional line connects a point downstream of a first component of the ATS to a point upstream of the first component and/or upstream of at least a second component, in turn arranged upstream of the first component. This second point upstream of the component is, in any case, always downstream of the exhaust manifold of the internal combustion engine IC.

A fan or compressor or pump P facilitates recirculation. Hereafter, the term pump P may also indicate a fan, an ejector or a compressor.

The pump, as well as any valves and flaps that enable closing the additional recirculation line, are controlled by a processing unit ECU preferably coinciding with the engine control unit.

The recirculation line together with the pump P are generically defined as exhaust gas recirculation means R in the ATS, which has nothing to do with EGR performed on the internal combustion engine.

When the component on which recirculation is performed is an SCR, if the dosing and mixing device D is present, it is preferred that the recirculation be performed upstream of or to the doser in order to increase local turbulence in the gas, thereby aiding better mixing of the exhaust gas with the urea spray.

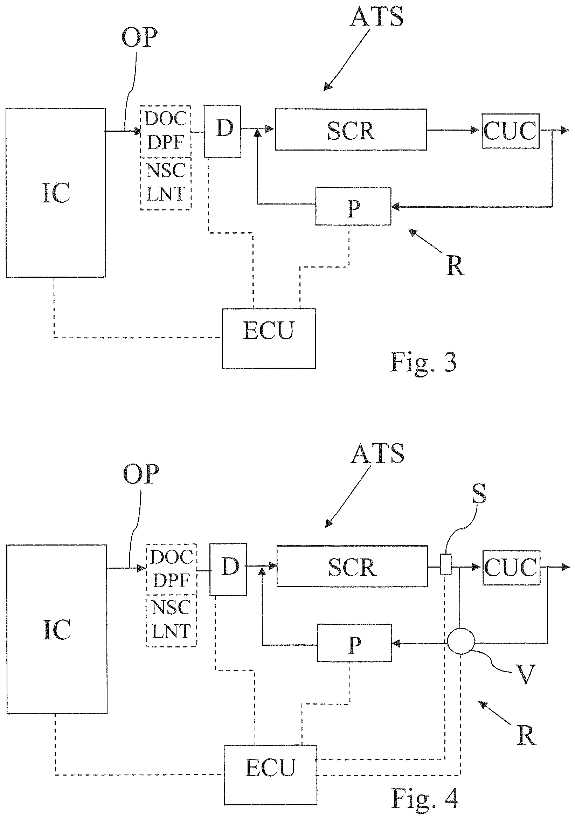

The CUC may or may not be present, and possibly integrated in the SCR. Extraction of exhaust gas can be performed either upstream, Figure 3, or downstream, Figure 4, of the CUC. Exothermic reactions take place in the CUC with the aim or removing excess ammonia. As a result of these reactions, the gas that passes through the CUC is heated even more. Therefore, it is particularly advantageous to recirculate exhaust gas extracted downstream of the CUC especially in warm-up conditions, where the ATS is below or just above its activation temperature. In these circumstances, the ECU can be programmed to provide enriched urea dosing, so as to maximize the exothermic reactions that take place in the CUC. In consequence, the gas extracted downstream of the CUC is definitely hotter and so its recirculation upstream of the SCR aids warm-up.

The technique of increasing the urea injected into the ATS when the SCR is cold, in order to improve its conversion efficiency at the expense of greater urea consumption, is known. According to the present invention, the exothermic effect resulting from this excess injection of urea is exploited thanks to the recirculation concept described herein.

According to the present invention, the exhaust gas recirculation of the ATS allows redirecting the heat produced at the CUC level to the ATS, to facilitate its warming up. Vice versa, when the ATS is in optimal operating conditions, from the thermal viewpoint, the practice of recirculating exhaust gas extracted upstream of the CUC can be advantageous, to exploit the excess ammonia it contains in the subsequent passage of this gas in the SCR. If it is not possible to selectively recirculate upstream and downstream of the CUC, then after the ATS is warmed up, the ECU limits the amount of urea to that strictly necessary for NOx conversion.

It is definitely advantageous to insert an ammonia and/or NOx sensor S between the SCR and the CUC, or possibly on the recirculation line, in order to control the injection of urea based on a measurement/estimate of excess ammonia. In this way it is possible to advantageously curb the consumption of urea that, together with fuel, contributes to determining the vehicle's running costs.

Therefore, according to an embodiment of the invention (see Figure 4), two extraction points can be provided, one upstream and one downstream of the CUC, together with a three-way valve V, for example, of the ON/OFF type, switching between the two extraction points for gas to be recirculated in relation to the operating conditions of the ATS.

This solution is feasible even when the CUC is made in one piece with the SCR, as it can optionally comprise a matrix that is separate and independent of that of the SCR and so an opening can always be made in the casing of the SCR/CUC where there is a gap between the SCR matrix and that of the CUC.

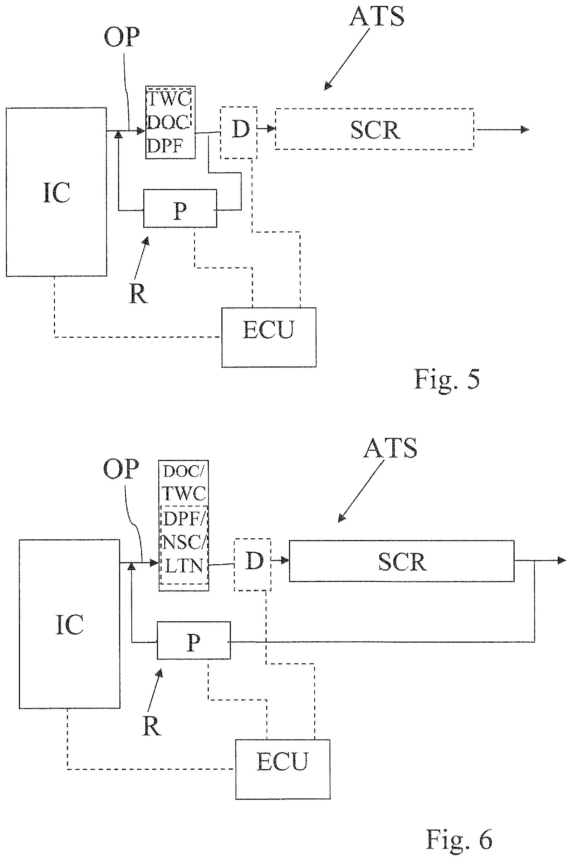

A similar effect for boosting ATS warm-up can be obtained by recirculating from a point downstream of the SCR to a point upstream of the DOC, namely putting the DOC, urea doser, SCR and possibly the DPF between the DOC and urea doser in the loop (see Figure 6). The excess urea in contact with the walls of the DOC will in fact generate the same exothermic reactions described regarding the CUC.

Based on what has been described so far, it is evident that a variable and controllable portion of exhaust gas is treated twice by the SCR. This advantageously results in a large NOx reduction without replicating the number of components of the ATS for handling the same result.

This means that it is possible to tolerate a higher percentage of NOx at the exhaust manifold, i.e. at the cylinder outlet, by limiting or stopping the action of the engine EGR, namely exhaust gas recirculation at the engine IC level, and/or by limiting or eliminating the fuel injection delay for the purpose of curbing NOx production.

In other words, in virtue of improved ATS efficiency, it is possible to avoid worsening the performance of the internal combustion engine for the purpose of reducing emitted pollutants.

The regulations currently in force require that NOx emissions into the atmosphere are less than 0.4 g/kWh.

It is estimated that 25% gas recirculation to the SCR can allow the emission regulations to be met, even when having 12-13g/kWh of NOx at the cylinder outlet. Such a high NOx level in output from the cylinders implies a fuel saving in the order of 2-3% with respect to today's standard, corresponding to 9-10 g/kWh, a consequence of the maximum efficiency of known SCR matrices.

This also corresponds to the effect of 10-15% engine EGR recirculation, which introduces pumping losses associated with the engine EGR recirculation that always entails greater fuel expenditure and the need to augment the heat dissipation capacity of the cooling system due to the EGR-cooler of the EGR.

Therefore, exhaust gas recirculation through the SCR can result in elimination of EGR, including the associated valve and cooler, in those applications that contemplate an EGR percentage of less than 15-20%.

An analysis of the sizing of ATSes has been carried out. It has been found that under cruising speed conditions, the internal combustion engine rotates at a speed usually below 50% of the maximum number of revs. In consequence, under such conditions, the gas flow stabilizes at a flow rate below 45% of that rated by design for the ATS, which corresponds to the gas flow at the engine's maximum revs.

Therefore, at least in these conditions, the ATS can in theory support recirculation of 55% of its rated design flow without getting to the point of producing anomalous back pressure in the internal combustion engine.

Assuming an SCR efficiency of 96%, which is a reasonable value if the SCR's urea injection system is feedback controlled, and an exhaust gas flow passing through it composed for 75% by gas coming from the engine and containing approximately 13 g/KWh NOx and for 25% by gas recirculated through the ATS, approximately 0.39 g/KWh NOx is obtained in output from the ATS.

Even assuming NOx emissions at the cylinder outlets as high as 25 g/KWh, if in the presence of an SCR efficiency of 98%, a value reached today under rated operating conditions, emissions into the atmosphere can be kept around the 0.4 g/KWh set by regulations.

For the calibrator (technician), this basically means being able to freely choose the fuel injection advance such as to have a preference for maximum fuel saving while ignoring NOx containment, yet always remain below the emissions levels set by regulations.

Furthermore, assuming an SCR efficiency of 90%, for example, in low operating temperature conditions or in deteriorated conditions due to component wear, it is possible to arrive at recirculating 50% of the rated exhaust gas flow and to control the injection advance by remaining around 8 g/KWh in input to the ATS, obtaining less than 0.4 g/KWh in output from the ATS, which represents the limit adopted by the most severe emission standards.

It is clear that, thanks to the present invention, it is possible to eliminate EGR also in those conditions where the EGR percentage is greater than 15-20% and/or increase the fuel injection advance times with respect to the PMS.

A larger quantity of NOx entering the ATS also entails a favourable impact on the accumulation of PM in the DPF. In fact, when the larger amount of NOx leaving the engine passes through the DOC it is partially transformed into NO2, which is oxide of nitrogen particularly reactive as an oxidant and which reacts at relatively low temperatures with the PM accumulated in the DPF. This mode of regeneration is said to be 'passive' or NO2-based and differs from the 'active' or O2-based one in that the injection of fuel to be burnt in the exhaust pipe is not necessary. In other words, the need for forced regenerations is completely eliminated and, all the more so, a DPF should not be considered an accumulator of pollutants, but a catalyst for pollutants, especially particulate matter.

Figure 5 shows an example which is not part of the invention, where the recirculation is performed through the DPF, which in the case of a diesel engine may comprise or integrate a DOC (not shown) arranged upstream of the DPF and, in the case of a petrol engine, may integrate or comprise a three-way catalyst TWC (not shown) arranged upstream of the DPF.

Since the latest regulations contemplate not only a reduction in the mass of particulate matter, but also the number of particles emitted, the solution shown in Figure 5 enables increasing the probability of particles with diameters smaller, e.g. PM2.5, than the filtration capability of the device colliding with particles of larger mass entering the DPF and with the walls of the DPF and thus be trapped. Therefore, the advantage achieved by the embodiment in Figure 5 is without doubt. In addition, it should be considered that the recirculation enables increasing turbulence in the exhaust gas, further increasing the probability of collision of particles of particulate matter with each other and with the walls of the DPF.

The effects described up to here regarding the embodiment in Figure 5 find even better application when the DPF is associated or integrated with a DOC or a TWC, possibly in one piece, and the recirculation is performed upstream of the DOC, so that many of the particles of mass smaller than the DPF's filter matrix have a higher probability of striking the walls of the DOC/TWC and becoming oxidized owing to the catalyser that covers the walls.

It is worth pointing out again that the of exhaust gas extracted downstream of the DPF and its recirculation upstream of the DOC/TWC virtually increases the N02 available for the oxidation process of particulate matter, and so the efficiency of the TWC/DOC+DPF is further improved, defining a synergetic effect between the two.

This effect allows resorting less frequently to O2-based DPF regeneration.

Therefore, if on one hand it is made possible to produce a greater total level of NOx, due to the greater virtual efficiency of the ATS achieved, on the other hand, the level of N02 in the above-indicated flow is virtually increased due to the effect of recirculation upstream of the DOC/TWC. Figure 6 shows a further example which in not part of the invention where the exhaust gas recirculation regards not only the DPF, but also the SCR/NSC/LTN downstream of the DPF.

This configuration in Figure 6, similar to that in Figure 4, is particularly advantageous in ATS warm-up conditions. In fact, the excess ammonia leaving the SCR/NSC/LTN and recirculated upstream of the DOC/TWC produces an exothermic reaction that induces heating of the DOC/TWC (not shown) and therefore of the ATS in general, exactly as described for the CUC.

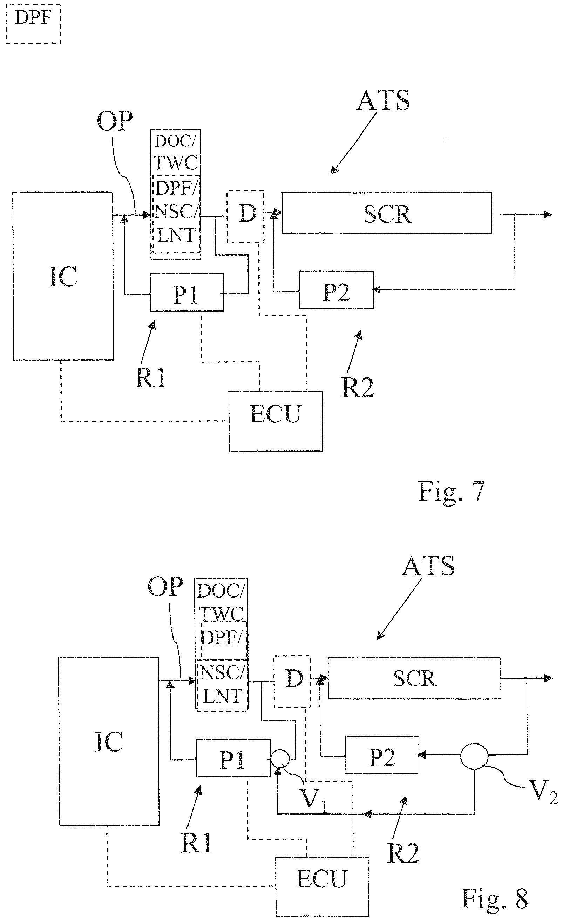

When the optimal temperature condition of the ATS is reached, the system can be switched to implement the solution in Figure 5 or, better still, the solution in Figure 7 described below.

Figure 7 shows a embodiment employing two recirculation circuits R1 and R2 with two separate pumps P1 and P2, or a single, double-acting pump. They are substantially in series. Figure 7 represents a combination of Figures 2 and 5.

The first recirculation stage R1 causes a substantial reduction in particulate matter PM and NOx (NO2 fraction), which neutralize each other as described above. The second recirculation stage R2 removes almost all the remaining NOx, but with a considerable contribution to reducing urea consumption, especially if the extraction of exhaust gas is performed upstream of the CUC.

A synergetic effect of recirculation also exists on the SCR (or NSC/LTN). It is in fact known that the SCR has a secondary, but not marginal action of oxidizing particulate matter, especially very fine particles. It is clear how the recirculation of exhaust gas through the SCR also results in a greater reduction of this pollutant in addition to NOx.

The present technical solutions can be combined with known solutions for reducing pollutants that are based on a trade-off between injection advance, EGR exhaust gas recirculation through the internal combustion engine and efficiency of the ATS.

Therefore, not only is it possible to switch between the different schemes and combinations described herein, in relation to the operating conditions of the engine+ATS system, but also to regulate the nominal percentage of exhaust gas recirculated through the ATS, also in terms of single recirculation circuits, the degrees of fuel injection advance, the amount of urea to inject and, if an EGR system is present, also the EGR recirculation percentage.

For example, among the further combinations of schemes, an 'internal' recirculation could be provided to one or more components and an 'external' recirculation to more components, including that subjected to 'internal' recirculation. In other words, internal loops and external loops could be provided, different from or in combination with the solution in Figure 7.

Through the solutions in Figures 4 and 6 it is possible to eliminate or limit the use of flaps that choke the engine in order to facilitate warm-up of the ATS.

Therefore, an object achieved by the solutions in Figures 4 and 6 is that of simplifying the thermal management of the ATS.

Figure 8 shows a solution that combines the solutions in Figure 6 and 7 through three-way valves V1 and V2, which enable switching between the solutions in Figures 6 and 7.

It is worth pointing out again that these valves can be of the ON/OFF type, but could also allow implementing a mixed operating mode, i.e. where both operating solutions function simultaneously.

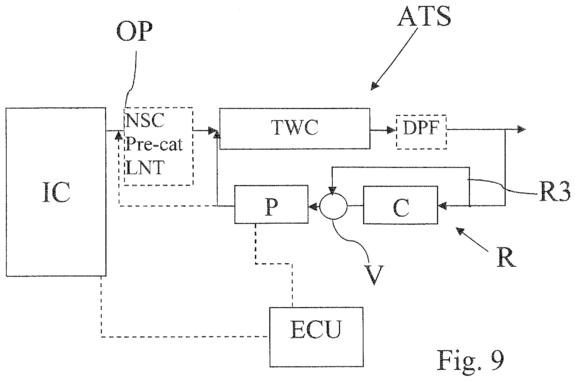

Figure 9 shows a embodiment , preferably adopted on a petrol engine, where a cooler is arranged on the exhaust gas recirculation line R, operating between a point downstream and a point upstream of the TWC, which allows the temperature of the recirculated gas to be lowered in order to achieve, as the weighted average of its temperature and the temperature of the gas leaving the engine, a reduction in the working temperature of that component in order to avoid it overheating.

It is worth pointing out that although only a TWC is indicated in Figure 9, it could be replaced by or integrated with other components, such as NSC/LTN/DPF.

It is known that if the temperature of 850 °C is exceeded, the catalysing beds start to degrade, resulting in progressive aging of the catalyst and deterioration of its conversion capacity with time. Today, this temperature is significantly exceeded by almost all petrol engines present on the market, especially turbocharged ones. Regulations have recently introduced a requirement, for petrol engines as well, of maintaining the type-approval emission limits for a mileage representative of the average life of the vehicle. Measures that prevent catalyst aging have thus been imposed.

It is clear that the example given in figure 9 also solves this technical problem.

A three-way valve and bypass means could be optionally provided for the cooler.

It is worth pointing out that recirculation can be also performed just through the ammonia abatement device aka clean-up device CUC in order to increase the related performance. The present invention can be advantageously implemented via a computer program that comprises code means for implementing one or more steps of the method, when this program is executed on a computer. Therefore, it is understood that the scope of protection extends to said computer program and also to computer readable means that comprise a recorded program, said computer readable means comprising program code means for implementing one or more steps of the method, when said program is executed on a computer.

Implementational embodiments with respect to the non-limitative example described are possible without departing from the scope of the present invention. From the foregoing description, an expert in the field is capable of constructing the subject of the invention without introducing further constructional details. The elements and the characteristics shown in the embodiment of figure 4 can be combined with each other without departing from the scope of the present invention. If not specifically excluded in the detailed description, that set forth in the description of the state of the art must be considered in combination with the characteristics of the present invention, forming an integral part of the present invention.

## Claims

1. A system for reducing harmful emissions of an internal combustion engine comprising an AfterTreatment System (ATS) having at least a first abatement device (DOC, DPF, SCR, TWC, CUC, pre-cat) for one or more pollutant types contained in exhaust gas passing through the ATS and comprising first recirculation means (R, R1, R2) of a portion of said exhaust gas through said at least first abatement without returning to the intake of the internal combustion engine the system being **characterized in that** said at least first abatement device comprises a Selective Catalytic Reduction (SCR) and a doser (D) of a urea-based reduction agent, and **in that** it comprises a second abatement device consisting of an ammonia oxidation catalyst (CUC) arranged downstream of said at least first abatement device and **in that** said first recirculation means (R, R2) comprise a line having a first end operatively connected to a first point downstream of said SCR and a second end operatively connected upstream or downstream of said doser (D) and **in that** said first point of connection is upstream or downstream of said CUC device and **in that** the system further comprises switching means (V) of said first point so that it can become upstream or downstream of said CUC device in relation to a working operating condition of said ATS and/or of said internal combustion engine.

2. A system according to claim 1, wherein said ATS comprises at least a third abatement device (DOC, DPF, SCR, TWC, CUC, pre-cat, NSC, LNT), possibly different from said at least first abatement device, operatively arranged upstream of said at least first abatement device and wherein said first recirculation means (R, R1, R2) are designed to perform recirculation to both said first and third abatement devices.

3. A system according to claim 1, wherein said recirculation is modulated as a function of the power supplied by said internal combustion engine.

4. A system according to one of the preceding claims, further comprising second recirculation means (R2) of a portion of said exhaust gas through said at least third abatement device arranged upstream of said first abatement device.

5. A system according to any of the preceding claims, further comprising a cooler (C) arranged on said first and/or second recirculation means.

6. A system according to any of the preceding claims, wherein said third abatement device is one of the following:
- diesel particulate filter (DPF),
- diesel oxidation catalyst (DOC),
- three-way catalyst (TWC) for petrol engines,
- diesel oxidation catalyst (DOC) combined with a diesel particulate filter (DPF),
- three-way catalyst (TWC) for petrol engines combined with a diesel particulate filter (DPF),
selective catalytic reduction
- Nitrogen Storage Catalyst (NSC);
- Lean NOx Trap (LNT).

7. A system according to one of the preceding claims, wherein said first recirculation means (R, R1) comprise a first pump (Pa) and/or wherein said second recirculation means (R2) comprise a second pump (P2) possibly coincident with said first pump.

8. A method of removing harmful emissions of an internal combustion engine comprising a system according to claim 1, wherein the exhaust gas is withdrawn upstream or downstream of said CUC device in relation to a working operating condition of said ATS and/or of said internal combustion engine.

9. A method according to claim 8, wherein said ATS comprises at least a third abatement device comprising at least one of the following:
- three-way catalyst (TWC) for petrol engines,
- diesel particulate filter (DPF),
- diesel oxidation catalyst (DOC),
- diesel oxidation catalyst (DOC) combined with a diesel particulate filter (DPF),
- three-way catalyst (TWC) for petrol engines combined with a diesel particulate filter (DPF) and/or a DOC and/or an LTN and/or an NSC,
arranged upstream of said at least first abatement device and wherein the method comprises a step of recirculating a portion of said exhaust gas through said at least first abatement device and a second step, following or simultaneous with said first step, of recirculating a portion of said exhaust gas through said at least third abatement device.

10. A computer program that comprises program code means designed to control the implementation of all the steps of one of claims 8 or 9, when said program is executed on a computer.

11. Computer readable means comprising a recorded program, said computer readable means comprising program code means designed to control the implementation of all the steps of one of claims 8 or 9, when said program is executed on a computer.

## Patentansprüche

1. System zur Verringerung von Schadstoffausstößen einer Brennkraftmaschine umfassend ein Nachbehandlungs-System (ATS) mit wenigstens einer ersten Minderungsvorrichtung (DOC, DPF, SCR, TWC, CUC, pre-cat) für eine oder mehrere in durch das ATS gehenden Abgasen enthaltenen Schadstoffarten und umfassend erste Rückführungsmittel (R, R1, R2) eines Teils der Abgase durch die wenigstens erste Minderung ohne zu der Zufuhr der Brennkraftmaschine zurückzukehren,
wobei das System
**dadurch gekennzeichnet ist, dass** die wenigstens erste Minderungsvorrichtung eine selektive katalytische Reduktion (SCR) und einen Dosierer (D) eines Harnstoff-basierten Reduktionsmittels umfasst und dadurch, dass es eine zweite Minderungsvorrichtung umfasst, bestehend aus einem Ammoniak-Oxidations-Katalysator (CUC), der der wenigstens ersten Minderungsvorrichtung nachgelagert angeordnet ist, und dadurch, dass die ersten Rückführungsmittel (R, R2) eine Leitung mit einem ersten Ende, welches mit einem ersten Punkt, der dem SCR nachgelagert ist, operativ verbunden ist und einem zweiten Ende, welches dem Dosierer vorgelagert oder nachgelagert operativ verbunden ist, und dadurch, dass der erste Verbindungspunkt der CUC-Vorrichtung vorgelagert oder nachgelagert ist und dadurch, dass das System ferner Schaltmittel (V) des ersten Punkts umfasst, sodass es in Bezug auf eine Betriebsbedingung des ATS und/oder der Brennkraftmaschine der CUC-Vorrichtung vorgelagert oder nachgelagert werden kann.

2. System gemäß Anspruch 1, wobei das ATS wenigstens eine dritte Minderungsvorrichtung (DOC, DPF, SCR, TWC, CUC, pre-cat, NSC, LNT) umfasst, gegebenenfalls unterschiedlich zu der wenigstens ersten Minderungsvorrichtung, operativ der wenigstens ersten Minderungsvorrichtung vorgelagert angeordnet, und wobei die ersten Rückführungsmittel (R, R1, R2) dazu ausgestaltet sind, Rückführung sowohl zu der ersten als auch der dritten Minderungsvorrichtung durchzuführen.

3. System gemäß Anspruch 1, wobei die Rückführung als eine Funktion der durch den Verbrennungs-Motor bereitgestellten Leistung moduliert wird.

4. System gemäß einem der vorstehenden Ansprüche, ferner umfassend zweite Rückführungsmittel (R2) eines Teils der Abgase durch die wenigstens dritte Minderungsvorrichtung, die der ersten Minderungsvorrichtung vorgelagert angeordnet ist.

5. System gemäß einem der vorstehenden Ansprüche, ferner umfassend einen Kühler (C), die auf den ersten und/oder zweiten Rückführungsmitteln angeordnet ist.

6. System gemäß einem der vorstehenden Ansprüche, wobei die dritte Minderungsvorrichtung eine der folgenden ist:
- Dieselpartikel-Filter (DPF),
- Diesel-Oxidations-Katalysator (DOC),
- Drei-Wege-Katalysator (TWC) für Benzinmotoren,
- Diesel-Oxidations-Katalysator (DOC) kombiniert mit einem Dieselpartikel-Filter (DPF),
- Drei-Wege-Katalysator (TWC) für Benzinmotoren kombiniert mit einem Dieselpartikel-Filter (DPF),
selektive katalytische Reduktion
- Stickstoff-Speicher-Katalysator (NSC);
- NOx-Speicher-Katalysator (LNT).

7. System gemäß einem der vorstehenden Ansprüche, wobei die ersten Rückführungsmittel (R, R1) eine erste Pumpe (Pa) umfassen und/oder wobei die zweiten Rückführungsmittel (R2) eine zweite Pumpe (P2) umfassen, die gegebenenfalls mit der ersten Pumpe übereinstimmt.

8. Verfahren zum Entfernen von Schadstoffausstößen einer Brennkraftmaschine, umfassend ein System gemäß Anspruch 1, wobei die Abgase in Bezug auf eine Betriebsbedingung des ATS und/oder der Brennkraftmaschine der CUC-Vorrichtung vorgelagert oder nachgelagert entzogen werden.

9. Verfahren gemäß Anspruch 8, wobei das ATS wenigstens eine dritte Minderungsvorrichtung umfasst, welche wenigstens einen der Folgenden umfasst:
- Drei-Wege-Katalysator (TWC) für Benzinmotoren,
- Dieselpartikel-Filter (DPF),
- Diesel-Oxidations-Katalysator (DOC),
- Diesel-Oxidations-Katalysator (DOC) kombiniert mit einem Dieselpartikel-Filter (DPF),
- Drei-Wege-Katalysator (TWC) für Benzinmotoren kombiniert mit einem Dieselpartikel-Filter (DPF) und/oder einem DOC und/oder einem LTN und/oder einem NSC,
dem wenigstens ersten Minderungsvorrichtung vorgelagert angeordnet und wobei das Verfahren einen Schritt zur Rückführung eines Teils der Abgase durch die wenigstens erste Minderungsvorrichtung umfasst und einen zweiten Schritt umfasst, der auf den ersten Schritt folgt oder dazu simultan ist, zur Rückführung eines Teils des Abgases durch die wenigstens dritte Minderungsvorrichtung.

10. Ein Computer-Programm, welches Programmcode-Mittel umfasst, die dazu ausgelegt sind, die Implementierung aller Schritte eines der Ansprüche 8 oder 9 zu steuern, wenn das Programm auf einem Computer ausgeführt wird.

11. Computer-lesbare Mittel umfassend ein gespeichertes Programm, wobei die Computer-lesbaren Mittel Programmcode-Mittel umfassen, die dazu ausgelegt sind, die Implementierung aller Schritte eines der Ansprüche 8 oder 9 zu steuern, wenn das Programm auf einem Computer ausgeführt wird.

## Revendications

1. Un système de réduction des émissions nocives d'un moteur à combustion interne comprenant un système de post-traitement (ATS) ayant au moins un premier dispositif de réduction (DOC, DPF, SCR, TWC, CUC, pré-cat) pour un ou plusieurs types de polluants contenus dans les gaz d'échappement traversant l'ATS et comprenant des premiers moyens de recirculation (R, R1, R2) d'une partie desdits gaz d'échappement à travers ledit au moins un premier dispositif de réduction sans retour d'admission dans le moteur à combustion interne, le système étant **caractérisé en ce que** ledit au moins premier dispositif de réduction comprend une réduction catalytique sélective (SCR) et un doseur (D) d'un agent réducteur à base d'urée, et **en ce qu'**il comporte un second dispositif de réduction consistant en un catalyseur d'oxydation d'ammoniac (CUC) disposé en aval dudit au moins premier dispositif de réduction, et **en ce que** lesdits premiers moyens de recirculation (R, R2) comprennent une ligne ayant une première extrémité connectée fonctionnellement à un premier point en aval de la SCR et une seconde extrémité connectée de manière opérationnelle en amont ou en aval dudit doseur (D), et **en ce que** le premier point de connexion est en amont ou en aval dudit dispositif CUC, et **en ce que** le système comprend en outre des moyens de commutation (V) dudit premier point de manière à ce qu'il puisse devenir en amont ou en aval dudit dispositif CUC par rapport à une condition de fonctionnement de travail dudit ATS et / ou dudit moteur à combustion interne.

2. Système selon la revendication 1, dans lequel ledit ATS comporte au moins un troisième dispositif de réduction (DOC, DPF, SCR, TWC, CUC, pré-cat, NSC, LNT), éventuellement différent dudit au moins premier dispositif de réduction, agencé opérationnellement en amont ou en aval dudit au moins premier dispositif de réduction et dans lequel lesdits premiers moyens de recirculation (R, R1, R2) sont conçus pour effectuer une recirculation au travers à la fois des premier et troisième dispositifs de réduction.

3. Système selon la revendication 1, dans lequel ladite recirculation est modulée en fonction de la puissance fournie par ledit moteur à combustion interne.

4. Système selon l'une des revendications précédentes, comprenant en outre des seconds moyens de recirculation (R2) d'une partie desdits gaz d'échappement à travers ledit au moins troisième dispositif de réduction disposé en amont dudit premier dispositif de réduction.

5. Système selon l'une quelconque des revendications précédentes, comprenant en outre un refroidisseur (C) agencé sur lesdits premiers et / ou seconds moyens de recirculation.

6. Système selon l'une quelconque des revendications précédentes, dans lequel ledit au moins troisième dispositif de réduction est l'un des suivants:
- filtre à particules diesel (DPF),
- catalyseur d'oxydation diesel (DOC),
- catalyseur à trois voies (TWC) pour moteurs à essence,
- catalyseur d'oxydation diesel (DOC) associé à un filtre à particules diesel (DPF),
- catalyseur à trois voies (TWC) pour moteurs à essence combiné à un filtre à particules diesel (DPF),
réduction catalytique sélective (SCR)
- catalyseur de stockage d'azote (NSC) ;
- piège à NOx (LNT).

7. Système selon l'une des revendications précédentes, dans lequel lesdits premiers moyens de recirculation (R, R1) comprennent une première pompe (Pa) et / ou dans lequel lesdits seconds moyens de recirculation (R2) comprennent une seconde pompe (P2) coïncidant éventuellement avec ladite première pompe.

8. Procédé d'élimination des émissions nocives d'un moteur à combustion interne comprenant un système selon la revendication 1, dans lequel les gaz d'échappement sont extraits en amont ou en aval dudit dispositif CUC par rapport à une condition d'opération de travail dudit ATS et/ou dudit moteur de combustion interne.

9. Procédé selon la revendication 8, dans lequel ledit ATS comprend au moins un troisième dispositif de réduction comprenant au moins l'un des éléments suivants:
- catalyseur à trois voies (TWC) pour moteurs à essence,
- filtre à particules diesel (DPF),
- catalyseur d'oxydation diesel (DOC),
- catalyseur d'oxydation diesel (DOC) combiné avec un filtre à particules diesel (DPF),
- catalyseur à trois voies (TWC) pour moteurs à essence combiné avec un filtre à particules diesel (DPF) et / ou un DOC et / ou un LTN et / ou un NSC,
disposé en amont dudit au moins premier dispositif de réduction et dans lequel le procédé comprend une étape de recirculation d'une partie desdits gaz d'échappement à travers ledit au moins premier dispositif de réduction et une second étape, suivant ou simultanément à ladite première étape, de recirculation d'une partie desdits gaz d'échappement à travers ledit au moins troisième dispositif de réduction.

10. Programme d'ordinateur comprenant des moyens de code de programme conçus pour commander la mise en oeuvre de toutes les étapes de l'une des revendications 8 ou 9, lorsque ledit programme est exécuté sur un ordinateur.

11. Des moyens lisibles par ordinateur comprenant un programme enregistré, ledit moyen lisible par ordinateur comprenant des moyens de code de programme conçus pour commander la mise en oeuvre de toutes les étapes de l'une des revendications 8 ou 9, lorsque ledit programme est exécuté sur un ordinateur.
